(19) Europäisches Patentamt
European Patent Office
Office européen des brevets

(11) **EP 2 678 772 B1**

(12) **EUROPÄISCHE PATENTSCHRIFT**

(45) Veröffentlichungstag und Bekanntmachung des Hinweises auf die Patenterteilung:
**08.04.2015 Patentblatt 2015/15**

(21) Anmeldenummer: **12710176.4**

(22) Anmeldetag: **24.02.2012**

(51) Int Cl.:
***G06F 7/00*** (2006.01)

(86) Internationale Anmeldenummer:
**PCT/EP2012/053165**

(87) Internationale Veröffentlichungsnummer:
**WO 2012/113908 (30.08.2012 Gazette 2012/35)**

(54) **VERSCHLÜSSELTES RECHNEN**

ENCRYPTED COMPUTING

CALCUL CRYPTÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2011 DE 102011012328**

(43) Veröffentlichungstag der Anmeldung:
**01.01.2014 Patentblatt 2014/01**

(73) Patentinhaber: **Gottfried Wilhelm Leibniz Universität Hannover**
**30167 Hannover (DE)**

(72) Erfinder:
• **BRENNER, Michael**
**31535 Neustadt a. Rbge. (DE)**
• **SMITH, Matthew**
**53115 Bonn (DE)**

(74) Vertreter: **Aisch, Sebastian et al**
**Gramm, Lins & Partner GbR**
**Patent- und Rechtsanwaltssozietät**
**Freundallee 13a**
**30173 Hannover (DE)**

(56) Entgegenhaltungen:
• **SANDER T ET AL: "PROTECTING MOBILE AGENTS AGAINST MALICIOUS HOSTS", MOBILE AGENTS AND SECURITY, SPRINGER VERLAG, BERLIN, DE, 1. Januar 1998 (1998-01-01), Seiten 44-60, XP002939810,**

• **Brecht Wyseur ET AL: "Encrypted Code", Information Society Technology, 1. August 2009 (2009-08-01), Seiten 1-35, XP55040790, Gefunden im Internet: URL:http://www.cosic.esat.kuleuven.be/publ ications/article-1327.pdf [gefunden am 2012-10-11]**
• **MARTEN VAN DIJK ET AL: "Fully Homomorphic Encryption over the Integers", 30. Mai 2010 (2010-05-30), ADVANCES IN CRYPTOLOGY Â EUROCRYPT 2010, SPRINGER BERLIN HEIDELBERG, BERLIN, HEIDELBERG, PAGE(S) 24 - 43, XP019142529, ISBN: 978-3-642-13189-9 sections 1,2,3.2**
• **Craig Gentry: "Fully Homomorphic Encryption Using Ideal Lattices", Proceedings of the 41st ACM Symposium on Theory of Computing - STOC 2009, 2. Juni 2009 (2009-06-02), Seiten 169-178, XP55030186, Gefunden im Internet: URL:http://www.cs.cmu.edu/~odonnell/hits09 /gentry-homomorphic-encryption.pdf [gefunden am 2012-06-18] in der Anmeldung erwähnt**
• **Ron L Rivest ET AL: "On data banks and privacy homomorphisms", Foundations of Secure Computation, 1. Januar 1978 (1978-01-01), Seiten 1-11, XP55040761, Gefunden im Internet: URL: http://people.csail.mit.edu/rivest/Riv estAdlemanDertouzos-OnDataBanksAndPrivacyH omomorphisms.pdf [gefunden am 2012-10-11]**

EP 2 678 772 B1

**Beschreibung**

Die Erfindung betrifft ein Verfahren zum Ausführen eines verschlüsselten Maschinencodes. Die Erfindung betrifft auch ein Computerprogramm und eine Vorrichtung hierzu sowie ein Verfahren und ein Computerprogramm zum Verschlüsseln von Maschinencodes.

**Einleitung**

Mit der fortschreitenden Vernetzung von technischen Geräten rücken mit zunehmendem Maße auch die Sicherheitsaspekte mehr und mehr in den Vordergrund. Dabei ist ein wesentlicher Punkt der Wunsch des Benutzers, dass seine Daten auf dem jeweiligen technischen Gerät, wie beispielsweise ein Computer, Laptop oder Smartphone zu jeder Zeit sicher sind, so dass beispielsweise Fremde bzw. Nichtberechtigte nicht ohne weiteres Zugriff auf die persönlichen Daten des Benutzers haben.

Darüber hinaus erfordert die immens gestiegene Verbreitung mobiler, digitaler Endgeräte, dass Programm und Daten gerade auf Systemen ohne physikalischen Zugriffschutz sicher sind und auch bei Abhandenkommen oder Diebstahl des Gerätes weiterhin geschützt bleiben. Es ist zu beobachten, dass aufgrund der gestiegenen Leistungsfähigkeit der mobilen Geräte anspruchsvolle Anwendungen zum Einsatz kommen, die ihrerseits wiederum Zugang zu sicherheitsrelevanten Datenbeständen bieten (bspw. Bankgeschäfte, Social Networks, etc). Auch in diesen Fällen muss sichergestellt werden, dass Unberechtigte nicht ohne weiteres Zugriff auf die sicherheitsrelevanten Datenbestände haben.

Neben der Frage der Datensicherheit der persönlichen Daten auf den eigenen Geräten rückt ein weiteres Problem aufgrund der zunehmenden Vernetzung in den Fokus, dass gerade im Bereich des sogenannten Cloud-Computing auftritt. Zum einen stellen große Grid- bzw. Cloud-Provider über ein Netzwerk bzw. das Internet Speicherplatz zur Verfügung, auf denen die Benutzer Daten hochladen können. Unter anderem werden verstärkt Rechenkapazitäten von Dritten angeboten, mit denen Rechen- bzw. Speicherressourcen gegen Entgelt zur Verfügung gestellt werden. So kann beispielsweise die Rechenleistung eines großen Rechenzentrums für eine begrenzte Zeit gegen Entgelt benutzt werden, um darauf beispielsweise komplexe Simulationen oder dergleichen ablaufen zu lassen.

Das Auslagern solcher Rechen- bzw. Speicherdienstleistungen an Dritte hat für die Unternehmen dabei den Vorteil, dass sie selber keine großen Rechenzentren unterhalten müssen, die erhebliche Kosten an Wartung und Instandsetzungen verursachen. Vielmehr kann bei Bedarf von entsprechenden Dienstleistern gegen eine Gebühr die benötigte Ressource gemietet werden. Es können dann entsprechende Programme und die dafür erforderlichen Daten auf die Datenverarbeitungsanlagen des Dienstanbieters hochgeladen und dann ausgeführt werden.

Der erhebliche Nachteil besteht jedoch darin, dass die Programme und die Daten in der Regel den Herrschaftsbereich des Unternehmens oder des Benutzers verlassen und in die Verfügungsgewalt des Dienstanbieters meist unbeschränkt geraten. Je höher dabei der Verteilungsgrad der Infrastruktur ist, desto schwieriger ist es für den Auftraggeber nachweisbar festzustellen, in wessen Einflussbereich die Algorithmen und Daten verarbeitet werden. So ist es durchaus für viele Unternehmen wichtig zu wissen, in welchem Einflussbereich welcher Gesetzgebung die Verarbeitung und Ausführung der Algorithmen und Daten nun tatsächlich stattfindet.

Zwar können mit herkömmlichen Mitteln die Wegstrecken der Programme und Daten verschlüsselt werden. Zum Zeitpunkt der Verarbeitung jedoch liegen die erforderlichen Daten- und Programmbestandteile unverschlüsselt und praktisch durch den Ressourcenbetreiber einsehbar vor, so dass eine sichere Verarbeitung der Programme und Daten zum Ausführungszeitpunkt nicht sichergestellt werden kann. Gerade für sicherheitssensible Daten, wie bspw. Bankdaten, ist es jedoch für alle Beteiligten wichtig sicherzustellen, dass sowohl die Programme als auch die Daten weder von dem Ressourcenbetreiber noch von eventuellen staatlichen Institutionen der betreffenden Länder einsehbar sind.

**Stand der Technik**

Aus der US 2010/0122095 A1 ist eine Hardware-Einheit bekannt, die sowohl einen CPU-Kern als auch eine Encryption Management Unit (EMU) auf ein und demselben Halbleiterchip vereint. Die Encryption Management Unit erhält verschlüsselte Instruktionen und Daten aus einem Speicher und kann diese mit Hilfe entsprechender geheimer Schlüssel entschlüsseln, wobei die Abarbeitung der Instruktionen bzw. die Bearbeitung der Daten letztendlich im Klartext, d. h. unverschlüsselt, in der CPU ausgeführt werden.

Die US 7,296,163 B2 offenbart beispielsweise ein Verfahren zum Ausführen eines verschlüsselten Programms, bei dem das Programm durch eine Matrix und einen entsprechenden Datenstring durch einen Vector verschlüsselt wird. Die Ausführung des Computerprogramms wird dann durch eine Matrixmultiplikation des verschlüsselten Computerprogramms mit dem Datenstring realisiert.

Die US 2010/0037066 A1 offenbart schließlich ein Informationsbearbeitungsgerät, dessen Speicher ein verschlüsseltes Programm vorliegt. Erhält eine Entschlüsselungseinheit, die mit dem Speicher verbunden ist, ein entsprechendes Signal, so entschlüsselt sie das verschlüsselte Programm und schreibt es in einem entsprechenden Speicherbereich ein, so dass es von einer CPU- oder Zentral-Einheit ausgeführt werden kann.

## Aufgabe

Es besteht somit die Aufgabe, ein verbessertes Verfahren anzugeben, bei dem die erforderlichen Daten und Programmbestandteile auf der Zielmaschine jederzeit verschlüsselt und somit uneinsehbar vorgehalten werden.

## Lösung

Gelöst wird die Aufgabe erfindungsgemäß durch das eingangs genannte Verfahren zum Ausführen eines bitweise homomorph verschlüsselten Maschinencodes durch eine auf einer Datenverarbeitungsanlage angeordnete Ausführungseinheit, wobei der verschlüsselte Maschinencode Instruktionen enthält, die von der Ausführungseinheit ausführbar sind, mit Bereitstellung von arithmetischen Funktionen, bei denen die Operanden und das daraus resultierende Ergebnis einer booleschen Logikfunktion entspricht, und Ausführen der in dem verschlüsselten Maschinencode enthaltenen Instruktionen durch die Ausführungseinheit unter Anwendung boolescher Logikoperationen, deren Berechnung durch die der jeweiligen booleschen Logikoperation entsprechenden arithmetischen Funktion unter Zugrundelegung der verschlüsselten Bits im Verschlüsselungsraum erfolgt.

Dadurch wird es möglich, dass ein verschlüsseltes Computerprogramm bzw. dessen Maschinencode, der in der Regel die auszuführenden Befehle bzw. Instruktionen und Daten enthält, auf der Zielmaschine nicht mehr entschlüsselt werden muss, um das Programm ablaufen zu lassen. Vielmehr erfolgt die Ausführung des Computerprogramms in der verschlüsselten Form, wobei alle für die Ausführung notwendigen booleschen Logikoperationen, wie beispielsweise AND, XOR, OR oder NOT, innerhalb des Verschlüsselungsraumes ausgeführt werden, wobei das Ergebnis dieser Operationen ebenfalls im Verschlüsselungsraum verbleibt und somit für die Zielmaschine nicht sichtbar ist. Die Ausführung der booleschen Logikoperationen im Verschlüsselungsraum erfolgt dabei durch arithmetische Funktionen, die bezüglich einer booleschen Logikoperation äquivalent sind.

Die CPU oder auch Zentraleinheit einer Datenverarbeitungsanlage ist in der Regel dazu eingerichtet, entsprechende Instruktionen oder Maschinenbefehle auszuführen, wie beispielsweise das Laden von Daten in eines der Register oder das Addieren zweier binärer Zahlen mit Hilfe einer arithmetic-logical-unit. Alle Berechnungen einer CPU- bzw. Zentraleinheit werden dabei auf binärer Ebene durchgeführt. Die kleinste binäre Informationseinheit, "bit" genannt, kann dabei die Werte logisch "0" und logisch "1" haben, was in der mathematischen Logik wahr und falsch und umgangssprachlich auch oft mit Strom an oder Strom aus bezeichnet wird.

Alle Operationen, die eine CPU- bzw. Zentraleinheit nun ausführt, werden aufgrund der binären Grundlage der Daten mit Hilfe von booleschen Logikoperationen und einer entsprechenden Schaltkreisimplementierung realisiert. In der Regel sind dies die booleschen Logikoperationen "XOR", "AND", "OR" und "NOT", wobei andere boolesche Logikoperationen, wie beispielsweise "NAND" durch die vorhergehenden Logikoperationen abgebildet werden können. Dabei ist es allgemein bekannt, dass beispielsweise die booleschen Logikoperationen "XOR" und "AND" für einmal das exklusive Oder und die Konjunktion ausreichen, um alle anderen booleschen Logikoperationen realisieren zu können, da sich alle Logikoperationen auf diese beiden zurückführen lassen.

Nun wurde erkannt, dass arithmetische Funktionen, wie beispielsweise die Addition oder Multiplikation, hinsichtlich der binären Werte oder der Paritäten der Operanden und Ergebnisse äquivalent sind zu den booleschen Logikoperationen. Dies wird anhand der nachfolgenden Tabelle bezüglich der booleschen Logikoperationen "XOR" und der arithmetischen Funktion "Addition", die insbesondere bezüglich der Paritäten zu der Logikoperation "XOR" äquivalent ist, dargelegt:

| XOR | 0 | 1 |
|-----|---|---|
| 0 | 0 | 1 |
| 1 | 1 | 0 |

| ADD | gerade | ungerade |
|-----|--------|----------|
| gerade | gerade | ungerade |
| ungerade | ungerade | gerade |

Die linke Tabelle ist eine Übersicht über die Ergebnisse der booleschen Logikoperation "XOR". Es ist zu erkennen, dass das Ergebnis der Operation "XOR" logisch 1 ist, wenn einer der Operanden den Wert logisch 1 und der andere Operand den Wert logisch 0 hat. Sind beide Operanden jedoch vom Wert her gleich, d. h. entweder beide logisch 0 oder logisch 1, so liefert die XOR-Operation den Wert logisch 0. Somit wird eine exklusives Oder realisiert, das umgangssprachlich auch häufig mit "entweder-oder" bezeichnet wird.

Die Funktionstabelle der binären Addition ohne Übertrag ist deckungsgleich mit der dargestellten Funktionstabelle XOR, so dass eine unmittelbare Abbildung zwischen den beiden Operationen durchführbar ist.

Auf der rechten Seite ist die Tabelle für die arithmetische Funktion "Addition" in Bezug auf ihre Paritäten dargestellt. Demnach ist die Parität des Ergebnisses der Addition dann gerade, wenn die beiden Operanden der Additionsfunktion entweder eine gerade oder eine ungerade Parität aufweisen. Mit anderen Worten, das Ergebnis der Addition weist immer dann eine gerade Parität auf, wenn die beiden Operanden entweder gerade Zahlen sind oder beide ungerade Zahlen sind. Wird hingegen eine gerade mit einer ungeraden Zahl addiert, so weist das Ergebnis immer eine ungerade Parität auf.

Wird nun die Parität "gerade" als logisch 0 und die Parität "ungerade" als logisch 1 interpretiert, so lässt sich die boolesche Logikfunktion "XOR" mit Hilfe der arithmetischen Funktion "Addition" abbilden und ist zu dieser äquivalent.

Ein ähnliches Äquivalenzverhalten ist auch zwischen der booleschen Logikoperation "AND" und der arithmetischen Funktion "Multiplikation" zu erkennen, wie die nachfolgende Tabelle dies darstellt.

| AND | 0 | 1 |
|---|---|---|
| 0 | 0 | 0 |
| 1 | 0 | 1 |

| MULT | gerade | ungerade |
|---|---|---|
| gerade | gerade | gerade |
| ungerade | gerade | ungerade |

Die boolesche Logikoperation "AND", auch Konjunktion genannt, weist als Ergebnis immer dann den Wert logisch 1 auf, wenn beide Operanden, oder im Falle einer mehrfachen Konjunktion, alle Operanden den Wert logisch 1 aufweisen. In allen anderen Fällen hat das Ergebnis der AND-Operation den Wert logisch 0.

Die Funktionstabelle der binären Multiplikation ist deckungsgleich mit der dargestellten Funktionstabelle AND, so dass eine unmittelbare Abbildung zwischen den beiden Operationen durchführbar ist.

Wie nun die rechte Tabelle für die Paritäten der Multiplikation zeigt, ist die arithmetische Funktion "Multiplikation" hinsichtlich der Paritäten der Operanden und Ergebnisse zu der booleschen Logikoperation "AND" äquivalent. Denn das Ergebnis der Multiplikation hat immer dann eine ungerade Parität, wenn die Paritäten der beiden Operanden vorher ebenfalls ungerade war. In allen anderen Konstellationen hat das Ergebnis der Multiplikation eine gerade Parität.

Erfindungsgemäß wird nun dieses Äquivalenzverhalten dazu verwendet, boolesche Logikoperationen innerhalb eines homomorphen Verschlüsselungsraumes auszuführen, ohne dass dabei die Zielmaschinen den Wert der Operanden und den Wert des Ergebnisses der booleschen Logikoperation kennt. Denn ein Homomorphismus, so wie er einer homomorphen Verschlüsselung zugrunde liegt, ist eine strukturerhaltende Transformation zwischen zwei Mengen, wobei die Operationen auf der ersten Menge bei der Transformation in die zweite Menge erhalten bleiben. Dies bedeutet konkret, dass bei einer homomorphen Verschlüsselung zweier Operanden es möglich ist, beispielsweise eine Addition durchzuführen, bei dem das Ergebnis nach der Entschlüsselung dem korrekten Ergebnis der Operation im Klartext entspricht. Mit anderen Worten, werden zwei homomorph verschlüsselte Zahlen addiert und wird das Ergebnis dieser Addition dann wieder entschlüsselt, so entspricht das Ergebnis dieser Verschlüsselung exakt dem Ergebnis der Addition der beiden unverschlüsselten Klartextzahlen. So lassen sich letztendlich mit einer homomorphen Verschlüsselung Zahlen verschlüsseln, wobei diese Verschlüsselungen nunmehr weiterhin bestimmten arithmetischen Funktionen zugänglich sind und mit diesen auch ganz normal gerechnet werden kann, ohne dass derjenige, der die Berechnung durchführt, die Werte der Operanden und Ergebnisse kennt. Erst nach der Entschlüsselung kann das exakte Ergebnis festgestellt werden. Ein entsprechendes Beispiel hierfür wird später noch in der Figurenbeschreibung erläutert.

Unter Anwendung einer derartigen homomorphen Verschlüsselung und der Äquivalenz von booleschen Logikoperationen mit entsprechenden arithmetischen Funktionen lassen sich somit binäre Darstellungen bitweise in Ganzzahlen oder andere geeignete Darstellungen repräsentieren, auf denen dann boolesche Logikoperationen im Verschlüsselungsraum mit Hilfe der arithmetischen Funktionen durchgeführt werden können, ohne dass die Zielmaschine den Wert der Operanden sowie das Ergebnis kennt. Da bei den arithmetischen Funktionen der binäre Werte bzw. die Parität der Operanden und Ergebnisse im Verschlüsselungsraum erhalten bleibt, was selbstverständlich für das Chiffrate nicht bedeuten muss, kann nach der Entschlüsselung das Ergebnis als logisch 0 oder logisch 1 interpretiert werden, was wieder zu einer binären Darstellung des Ergebnisses führt.

Auf Grundlage dieser Erkenntnis lassen sich nun boolesche Logikoperationen, wie sie von einer CPU oder Zentraleinheit ausgeführt werden, in einem homomorphen Verschlüsselungsraum ausführen, wobei alle booleschen Logikoperationen, die von der Zielmaschine ausgeführt werden müssen, auf die entsprechenden arithmetischen Funktionen abgebildet werden. Da die Arbeitsweise einer CPU letztendlich auf Grundlage solcher booleschen Logikoperationen basiert, lässt sich mit Hilf einer Ausführungseinheit ein CPU-Modell abbilden, welches anstelle der boolesche Logikoperationen die entsprechenden arithmetischen Funktionen aufweist und somit ein homomorph verschlüsseltes Computerprogramm inklusive der enthaltenen Daten ausführen kann, ohne dass die Maschine zu irgendeinem Zeitpunkt weiß, welche Berechnungsschritte tatsächlich durchgeführt werden. Denn die gesamte Berechnung erfolgt auf boolescher Ebene innerhalb des homomorphen Verschlüsselungsraumes, wobei die Korrektheit zum einen aufgrund der Äquivalenz zu den arithmetischen Funktionen und zum anderen aufgrund der strukturerhaltene Transformation des Homomorphismus gewährleistet werden kann.

Vorteilhafterweise lässt sich die boolesche Logikoperation "OR" durch die insbesondere hinsichtlich der binären Werte bzw. der Paritäten äquivalente arithmetische Funktion:

$$r = (a + b) + (a \cdot b)$$

abbilden, wobei r das Ergebnis der Operation ist, a der erste Operand und b der zweite Operand als homomorph verschlüsselte Repräsentation ist. Diese arithmetische Funktion lässt sich dabei aus dem Zusammenhang herleiten, dass die boolesche Logikoperation "OR" sich durch die boolesche Logikoperationen "XOR" und "AND" abbilden lässt.

Des Weiteren ist es besonders vorteilhaft, wenn die boolesche Logikoperation "NOT" als logische Negation durch die insbesondere hinsichtlich der binären Werte bzw. der Paritäten äquivalente arithmetische Funktion

$$r = a + 1$$

mit a als einen Operand und r als dem Ergebnis der Funktion abgebildet wird. Denn durch die Addition der Zahl 1 zu einer wie auch immer gearteten Ganzzahl bzw. einer übertragslosen binären Addition mit dem Wert 1 wird schließlich immer die Parität bzw. der binäre Wert gewechselt, was letztendlich in der booleschen Logik ebenfalls einem Wertewechsel von logisch 0 zu logisch 1 oder andersherum entspricht.

Die Aufgabe wird im Übrigen auch mit einem Computerprogramm mit Programmcodemitteln, eingerichtet zur Durchführung des vorstehenden Verfahrens, gelöst, wenn das Computerprogramm auf einer Datenverarbeitungsanlage ausgeführt wird.

So ist es denkbar, dass ein Computerprogramm auf einer herkömmlichen Datenverarbeitungsanlage ausgeführt wird, wobei das Computerprogramm die Ausführung des verschlüsselten Maschinencodes unter Zugrundelegung der arithmetischen Funktionen durchführt. Somit können auf herkömmlichen Datenverarbeitungsanlagen verschlüsselte Maschinencodes ausgeführt werden, ohne dass die Datenverarbeitung selber Kenntnis davon hat, wie und was gerechnet wird.

Unter Maschinencode wird im Sinne dieser Erfindung eine Anzahl von Instruktionen verstanden, die direkt und ohne weitere Zwischenschritte von einer CPU oder, wie in diesem Fall, von einem Computerprogramm, das die Funktionsweise einer CPU emuliert, ausgeführt werden kann. Somit ist der Maschinencode letztendlich von Programmiersprachen, wie beispielsweise Assembler oder anderen Hochsprachen abzugrenzen.

Darüber hinaus wird die Erfindung auch mit Hilfe einer Vorrichtung zum Ausführen eines homomorph verschlüsselten Maschinencodes mit Hilfe des vorstehend genannten Verfahrens gelöst, wobei die Vorrichtung eine Ausführeinheit aufweist, die zur Ausführung, wie vorstehend genannt, eingerichtet ist. So lässt sich das auf arithmetische Grundfunktionen abgebildete CPU-Modell neben einer reinen Softwareimplementierung auch in Hardware implementieren, was die Verarbeitungsgeschwindigkeit erheblich erhöht.

Die Aufgabe wird im Übrigen auch gelöst durch ein Verfahren zum Verschlüsseln eines Maschinencodes mit Verschlüsseln jedes Bits des Maschinencodes unter Verwendung eines homomorphen Verschlüsselungsverfahrens derart, dass jedes Bit des Maschinencodes durch einen Verschlüsselungscode repräsentiert wird.

Der Verschlüsselungscode kann dabei bspw. eine Ganzzahl oder eine andere geeignete Darstellung sein.

Jedes Bit, das letztendlich die kleinste Informationseinheit im Binärsystem darstellt, wird mit Hilfe eines homomorphen Verschlüsselungsverfahrens in einen Verschlüsselungscode verschlüsselt. Aufgrund der oben beschriebenen Äquivalenz von booleschen Logikoperationen zu ihren entsprechend arithmetischen Funktionen lässt sich somit eine boolesche Logikoperation mit Hilfe der entsprechend arithmetischen Funktion auf den verschlüsselten Verschlüsselungscodes durchführen, wobei der binäre Wert im Verschlüsselungsraum bei den Operationen erhalten bleibt.

So lässt sich beispielsweise mit Hilfe der Formel

$$a` = q \cdot a + (r \cdot p)$$

jedes Bit eines Maschinencodes in einer Ganzzahl verschlüsseln, wobei a das zu verschlüsselnde Bit darstellt, q ein weiterer Faktor ist, p der geheime Schlüssel zum Ver- und Entschlüsseln ist und r eine beliebige Zufallszahl darstellt. Das Ergebnis der Verschlüsselung, das heißt die Ganzzahl, ist dann a'.

Neben der oben angeführten Verschlüsselungsart, bei der auf die Paritäten abgestellt wird, können auch komplexere Verschlüsselungsverfahren verwendet werden, um die Verschlüsselungssicherheit zu erhöhen. So können bspw. auch Verfahren nach Gentry (vgl. C. Gentry, "Fully homomorphic encryption using ideal lattices", Proceedings of the 41 st annual ACM symposium on Symposium on theory of computing - STOC '09, 2009, p. 169), nach Smart (vgl. N.P. Smart and F. Vercauteren, "Fully Homomorphic Encryption with Relatively Small Key and Ciphertext Sizes", Public Key Cryptography-PKC 2010: 13th International Conference on Practice and Theory in Public Key Cryptography) oder nach van Dijk (vgl. M.v. Dijk, C. Gentry, S. Halevi, and V. Vaikuntanathan, "Fully Homomorphic Encryption over the Integers", Advances in Cryptology-EUROCRYPT 2010, Lecture Notes in Computer Science, 2010, Volume 6110/2010, 24-43, DOI: 10.1007/978-3-642-13190-5_2) verwendet werden.

Diese voll homomorphen Verschlüsselungsverfahren codieren die binären Werte 0 und 1 in der Regel nicht direkt in die verschlüsselten Repräsentanten (wie bspw. die Paritäten in den oben gezeigten Ausführungsformen). Bei Gentry werden die Werte 0 und 1 als Eigenschaft von Matrizen und Vektoren verschlüsselt, wobei sich bei den geometrischen Verknüpfungen zweier Vektoren, die als Addition und Multiplikation interpretiert werden können, neue Vektoren ergeben, deren Eigenschaft sich wiederum auf die Werte 0 und 1 reduzieren lassen. Das Verschlüsselungsschema von Smart verwendet im Gegensatz dazu zur Darstellung der binären Werte Ganzzahlen und Polynome, die bestimmte, unterscheidbare Eigenschaften aufweisen. Anders als im vorgestellten Modellverfahren mit dem Klartextwertebereich der natürlichen Zahlen ist der Wertebereich der Klartextdarstellung bei Gentry, Smart und van Dijk gegeben als {0, 1}. Zur Vereinfachung ist daher im Sinne dieser Erfindung stets von binären Werten oder Paritäten die Rede, da diese Darstellungen äquivalent sind. Die Erfindung ist jedoch nicht auf eine der genannten homomorphen Verschlüsselungsverfahren beschränkt.

Die vorliegende Erfindung wird anhand der beigefügten Zeichnungen beispielhaft näher erläutert. Es zeigen:

Figur 1 - schematische Darstellung eines Schaltkreises zum verschlüsselten Speicherzugriffs;
Figur 2 - schematische Darstellung eines Schaltkreises einer verschlüsselten Arithmetic-Logic-Unit (ALU);
Figur 3 - schematische Darstellung eines CPU-Modells;
Figur 4 - schematische Darstellung des verteilten Rechners.

Bevor die Figuren näher erläutert werden, soll anhand einiger Beispiele die Funktionsweise der homomorphen Verschlüsselung und die darauf ausführbaren Operationen näher erläutert werden. Hierfür wird ein einfaches, auf Paritäten beruhendes Verschlüsselungsverfahren gewählt. Die Erfindung ist jedoch nicht darauf beschränkt.

Seien a und b beliebige natürliche Zahlen, beispielsweise a = 3 und b = 5. Diese beiden Zahlen werden nun mit Hilfe eines homomorphen Verschlüsselungsverfahrens, beispielsweise mit Hilfe der Funktion:

$$a` = a + (r \cdot p)$$

in eine beliebig große Ganzzahl verschlüsselt. Als geheimen Schlüssel p wird die Primzahl 23 gewählt. Für jede Verschlüsselung wird für r eine unterschiedliche, beliebige Zufallszahl gewählt, beispielsweise $r_1 = 7$ und $r_2 = 11$.

Dann ergibt sich für die Zahlen a und b folgende Verschlüsselung:

$$a` = a + (r_1 \cdot p)$$

$$a` = 3 + (7 \cdot 23)$$

$$a` = 164$$

$$b = b + (r_2 \cdot p)$$

$$b` = 5 + (11 \cdot 23)$$

$$b` = 258$$

Wie in diesem einfachen, homomorphen Verschlüsselungsverfahren ersichtlich, ergibt sich die Entschlüsselung durch die Restdivision mit dem geheimen Schlüssel p ("mod" entspricht der Modulo-Operation)

$$a = a` \bmod p$$

Der Klartext ist in diesem Verschlüsselungsverfahren somit der Rest des Schlüsselvielfachen. Selbstverständlich sind aber auch andere homomorphen Verschlüsselungsverfahren denkbar, die eine höhere Sicherheit oder eine geringere Ungenauigkeit bei höheren Zahlendarstellungen haben, beispielsweise die genannten Verfahren nach Gentry, Smart und van Dijk.

Ziel der homomorphen Verschlüsselung ist es, dass Operationen der Schlüsselzahlen des exakt selbe Ergebnis der in den Schlüsselzahlen verschlüsselten geheimen Klartextzahlen entspricht. Mit anderen Worten, werden zwei verschlüsselte Ganzzahlen miteinander addiert, so muss bei der Entschlüsselung des Ergebnisses diese Addition das Ergebnis der Addition der beiden Klartextzahlen stehen.

Anhand des oben genannten Beispieles von a und b soll dies demonstriert werden. Die Addition von a = 3 und b = 5 ist r = 8. Dieses Ergebnis muss bei einer homomorphen Verschlüsselung auch herauskommen, wenn die beiden Schlüsselzahlen a' und b' miteinander addiert werden und das Ergebnis anschließend mit Hilfe des geheimen Schlüssels p entschlüsselt wird.

$$r` = a` + b`$$

$$r` = 164 + 258$$

$$r` = 422$$

$$r = r` \bmod p$$

$$r = 422 \bmod 23$$

$$r = 8$$

Das gleiche gilt auch für die arithmetische Funktion der Multiplikation. Werden die Zahlen a = 3 und b = 5 miteinander multipliziert, so ergibt sich r = 15. Werden die Schlüsselzahlen a' und b' miteinander multipliziert, so ergibt sich

$$r` = 42312$$

Wird r' nun unter Verwendung des geheimen Schlüssels p = 23 entschlüsselt, so ergibt sich

$$r = 42312 \bmod 23$$

$$r = 15.$$

Mit Hilfe einer homomorphen Verschlüsselung lassen sich somit Zahlen verschlüsseln, wobei weiterhin arithmetische Funktionen auf die Schlüsselzahlen derart anwendbar sind, dass in den verschlüsselten Repräsentationen der Ergebnisse das eigentliche Ergebnis der Klartext-Operation enthalten ist.

Diese mathematische Eigenart von homomorphen Verschlüsselungen kann nun dazu verwendet werden, boolesche Schaltkreise unter Anwendung der Äquivalenz zur Binärarithmetik bzw. der Paritäts-Äquivalenz zu verschlüsseln. Denn wie bereits einleitend gezeigt, entsprechen die binären Ergebnisse bzw. Paritäten der Additions-Funktion der booleschen Logikoperation "XOR" und die Multiplikations-Funktion der booleschen Logikoperation "AND". Damit lässt sich ausgehend von einer (verschlüsselten) Ganzzahlrepräsentation oder einer anderen geeigneten Darstellung eines Bits eine Kette von Operationen ausführen, an deren Ende der (verschlüsselte) Repräsentant des Ergebnisbits steht. Dies soll anhand eines Beispieles kurz erläutert werden.

Seien a und b zwei Bits, die entweder den Wert logisch 0 oder den Wert logisch 1 annehmen können. Für das folgende Beispiel wird angenommen, dass a = 1 und b = 0 ist. Unter Verwendung des bereits zuvor verwendeten geheimen Schlüssels p = 23 und der beliebigen Zufallszahlen $r_1$ = 7 und $r_2$ = 11 lassen sich die beiden Bits a und b wie folgt in eine Ganzzahlrepräsentation a' und b' unter Verwendung des einfachen homomorphen Verschlüsselungsverfahrens verschlüsseln:

$$a` = a + (r_1 \cdot p)$$

$$a` = 1 + (7 \cdot 23)$$

$$a` = 162$$

$$b` = b + (r_2 \cdot p)$$

$$b` = 0 + (11 \cdot 23)$$

$$b` = 253$$

Zu beachten ist, dass aufgrund der Paritätsannahme die Bits mit dem binären Wert 0 durch jede gerade natürliche Zahl repräsentiert werden können, Bits mit dem binären Wert 1 dagegen durch jede ungerade natürliche Zahl.

Durch die Verschlüsselung der einzelnen Bits in eine beliebig große Ganzzahlrepräsentation lassen sich somit herkömmliche boolesche Logikoperationen, beispielsweise XOR, nicht mehr anwenden. Stattdessen wird nunmehr eine arithmetische Funktion auf die verschlüsselten Ganzzahlrepräsentationen angewendet, die zu der jeweiligen booleschen Logikoperation hinsichtlich der Paritäten der Operanden und des Ergebnisses äquivalent ist. Dies gilt auch für andere als das dargestellte, einfache Verschlüsselungsverfahren. Da bei einer homomorphen Verschlüsselung mathematische Funktionen im Verschlüsselungsraum derart ausgeführt werden, dass auch das eigentliche Klartextergebnis korrekt ist, lassen sich so boolesche Operationen im Verschlüsselungsraum mit Hilfe dieser mathematischen Repräsentationen abbilden.

Dies soll am Beispiel der booleschen Logikoperation XOR kurz gezeigt werden. Wie offensichtlich, hat die Operation a XOR b den Wert logisch 1, da einer der Operanten (a) den Wert logisch 1 hat und der andere Operand (b) den Wert logisch 0. In der Verschlüsselung beziehungsweise im Verschlüsselungsraum lässt diese Operation wie folgt abbilden:

$$r` = a` + b`$$

$$r` = 162 + 253$$

$$r` = 415$$

r' enthält nunmehr das logische Ergebnis der XOR Operation derart, dass auf den logischen Wert des Ergebnisses anhand der Parität der Klartextzahlen geschlossen werden kann. Unter Zugrundelegung des geheimen Schlüssels p = 23 ergibt sich bei der Entschlüsselung

$$r = r` \bmod p$$

$$r = 415 \bmod 23$$

$$r = 1$$

Da das Ergebnis der Entschlüsselung eine ungerade Zahl ist, kann somit auf den Wert logisch 1 geschlossen werden, was der oberen Klartextberechnung von a XOR b entspricht.

Selbstverständlich lässt sich so auch die boolesche Logikoperation "AND" mit der arithmetischen Funktion "Multiplikation" im Verschlüsselungsraum abbilden, so dass sich auch dieser boolesche Schaltkreis damit im Verschlüsselungsraum abbilden lässt. Andere boolesche Logikoperationen lassen sich dabei durch die Anwendung von XOR und AND abbilden, beispielsweise die boolesche Logikoperation OR mit

$$r = (a + b) + (a \cdot b)$$

was der zusammengesetzten booleschen Logikoperation

$$r = (a\ XOR\ b)\ XOR\ (a\ AND\ b)$$

entspricht. Die Negation als boolesche Logikoperation lässt sich bei diesem Ausführungsbeispiel anhand der Addition einer 1 realisieren, da sich dadurch immer die Parität sowohl bei der verschlüsselten Ganzzahlrepräsentation, was an und für sich unwichtig ist, als auch bei der verschlüsselten Klartextzahl ändert. Diese Auswirkung auf den Klartext gilt dabei auch für andere homomorphe Verschlüsselungsverfahren.

Wird nun jedes Bit eines Maschinencodes mit Hilfe einer derartigen homomorphen Verschlüsselung durch eine entsprechende Darstellung (bspw. Ganzzahl) repräsentiert, so lassen sich die ansonsten ausgeführten Bitweisen booleschen Logikoperationen durch die entsprechenden arithmetischen Funktionen ersetzen, so dass die booleschen Logikoperationen innerhalb des Verschlüsselungsraumes ausgeführt werden können.

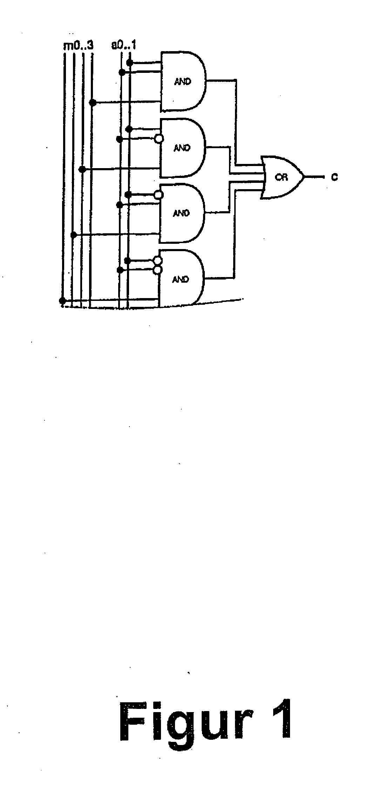

Bei Anwendung dieses Schemas lässt sich nun ein entsprechend verschlüsselter Maschinencode ausführen. Figur 1 zeigt hierzu beispielhaft einen Datenselektor, der einen verschlüsselten Speicherzugriff realisiert. Gegeben seien die Speicherleitungen m0 bis m3. Der Inhalt einer dieser Speicherleitungen m0 bis m3 soll mit Hilfe einer entsprechenden Adressierung a0 bis a1 letztlich ausgegeben werden. Hierfür ist jede der Speicherleitungen m0 bis m3 jeweils mit einem booleschen Logikoperator "AND" verbunden, deren Ausgänge wiederum die Eingänge eines booleschen Logikoperators "OR" sind. Die in diesem Beispiel beiden Adressleitungen a0 und a1 sind ebenfalls mit den Logikoperatoren "AND" verbunden. Je nach dem, welche Adresse a0 und a1 angelegt ist, wird der entsprechende Logikoperator "AND" auf die Datenleitung geschaltet.

Für diese in Figur 1 gezeigten vier Speicher beziehungsweise Datenleitungen und den beiden Adressleitungen lässt sich der Zugriff durch die folgende boolesche Logik abbilden:

$$c = (\neg a_0 \text{ AND } \neg a_1 \text{ AND } m_0)$$

OR

$$(a_0 \text{ AND } \neg a_1 \text{ AND } m_1)$$

OR

$$(\neg a_0 \text{ AND } a_1 \text{ AND } m_2)$$

OR

$$(a_0 \text{ AND } a_1 \text{ AND } m_3)'$$

Durch die Verschlüsselung der einzelnen Bits lassen sich für die einzelnen booleschen Logikoperationen nunmehr die bereits gezeigten, entsprechend äquivalenten arithmetischen Funktionen ersetzen, so dass sich für diese boolesche Logik folgende äquivalente Arithmetik ergibt:

$$c = ((a_0 + 1) \cdot (a_1 + 1) \cdot m_0) \circ$$
$$(a_0 \cdot (a_1 + 1) \cdot m_1) \circ$$
$$((a_0 + 1) \cdot a_1 \cdot m_2) \circ$$
$$(a_0 \cdot a_1 \cdot m_3)$$

Wobei der Operator $\circ$ der arithmetischen Funktion für die boolesche Logikoperation "OR" wie folgt entspricht:

$$a \circ b = (a + b) + (a \cdot b)$$

Aufgrund der Übersichtlichkeit wird hier auf das Ausformulieren der Arithmetik "OR" verzichtet. Anhand eines Ausführungsbeispieles, welches ebenfalls auf dem vereinfachten Verschlüsselungsverfahren beruht, soll die Arbeitsweise kurz erläutert werden. Seien $m_0$ bis $m_3$ die Elemente der zufälligen Bitreihe [1,0,1,0] mit hinsichtlich der Paritäten äquivalenten Ganzzahl-Repräsentation [5,4,9,6] und seien $a_0$ bis $a_1$ die Elemente der Reihe [8,3] als Repräsentation der Adresse 2 in Binärform. Die homomorphe Verschlüsselung in diesem Fall wurde so gewählt, dass die Klattextparitäten der zu verschlüsselnden Daten auch in dem Verschlüsselungstext selber erhalten bleibt, so dass Klartext und Verschlüsselungstext immer dieselbe Parität haben. Dies erleichtert die Darstellung der Funktionsweise und dient lediglich zu Anschauungszwecken. Konkret wurde hier der Zufallsparameter r mit dem Wert 0 gewählt, wodurch die Klartextparitäten auch in der Verschlüsselung ablesbar bleiben.

Nach Einsetzen aller Parameter ergibt sich folgende Ganzzahl-Arithmetik für den Speicherzugriff:

$$c = ((8 + 1) \cdot (3 + 1) \cdot 5) \circ$$
$$(8 \cdot (3 + 1) \cdot 4) \circ$$
$$((8 + 1) \cdot 3 \cdot 9) \circ$$
$$(8 \cdot 3 \cdot 6)$$

$$c = 180 \circ 128 \circ 243 \circ 144$$

$$c = 826087619$$

Da wie bereits erwähnt, in diesem Beispiel die Klartextparität bei der Verschlüsselung erhalten bleibt, lässt sich das Klartext-Ergebnis dieser Operation direkt aus der Parität des Verschlüsselungstextes ableiten, ohne dass der Verschlüsselungstext hierfür noch einmal entschlüsselt werden muss. Aufgrund der Tatsache, dass das Ergebnis dieser oben durchgeführten Arithmetik eine ungerade Zahl ist, ergibt sich der Wert logisch 1, was dem Inhalt der Speicheradresse $m_2$ entspricht.

Bei dem schreibenden Speicherzugriff wird einer Schreibfunktion die Repräsentation des neuen Wertes als Eingabe übergeben. Dabei wird über alle Speicherreihen iteriert und entweder der neue Input in die selektierte Speicherreihe geschrieben oder der alte Wert übernommen. In jedem Fall wird jede Speicherreihe neu beschrieben.

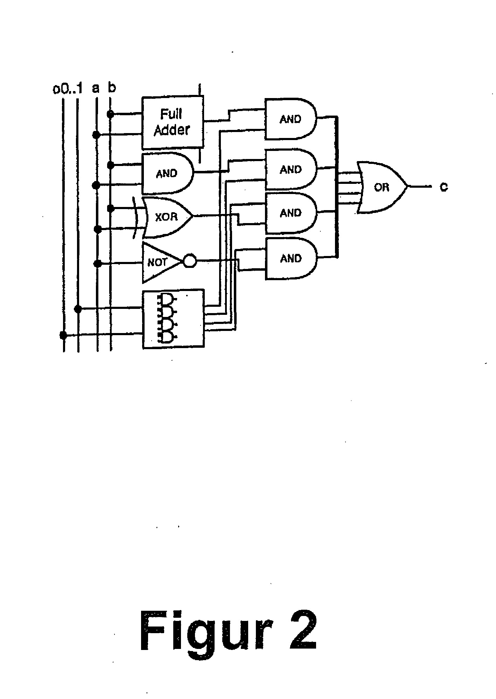

Nach diesem Schema eines Datenselektors, wie er in Figur 1 dargestellt ist, lassen sich nun auch alle anderen Operationen einer CPU, wie beispielsweise die ALU, verschlüsselte Sprünge und dergleichen abbilden. Ein einfacher ALU-Schaltkreis, der mit den oben gezeigten Mitteln in eine verschlüsselte Repräsentation überführt werden kann, zeigt hierbei beispielsweise Figur 2.

Die in Figur 2 gezeigte ALU erhält als Eingabe zwei Operanden a und b, die je eine verschlüsselte Repräsentation von Bits darstellen. Über ein Operationssignal $o_0$ und $o_1$ lässt sich darüber hinaus die ALU entsprechend ansteuern, so dass die ALU letztendlich das Ergebnis ausgibt, das der Berechnung entspricht, welches mit den Operationssignalen $O_0$ und $O_1$ adressiert wurde. Die Auswahl erfolgt letztendlich bei dieser verschlüsselten ALU auch über die boolesche Logikoperation "AND", deren Ausgänge der Eingang zu einer booleschen Logikoperation OR sind. Je nach dem, welche Operation durch die Adressen $O_0$ und $O_1$ adressiert wurden, wird die entsprechende AND-Operation geschaltet.

Die hier beispielhaft dargestellte verschlüsselbare, arithmetische Repräsentation einer ALU kann dabei die folgenden Funktionen ausführen:

$$c_{add} = \text{fulladder } (a, b)$$

$$c_{and} = a \text{ AND } b$$

$$c_{XOR} = a \text{ XOR } b$$

$$c_{not} = \neg\, a$$

Wobei die Funktion "fulladder" der übertragsbehafteten Addition zweier Binärzahlen entspricht.

Durch die Verwendung der homomorphen Verschlüsselung und der hierfür notwendigen Arithmetik ergibt sich für die verschlüsselte ALU folgende, arithmetisch äquivalente Repräsentation:

$$
\begin{aligned}
c = \quad & (c_{add} \cdot ((o_0 + 1) \cdot (o_1 + a)))\; \circ \\
& (c_{and} \cdot (o_0 \cdot (o_1 + 1)))\; \circ \\
& (c_{XOR} \cdot ((o_0 + 1) \cdot o_1))\; \circ \\
& (c_{not} \cdot (o_0 \cdot o_1))
\end{aligned}
$$

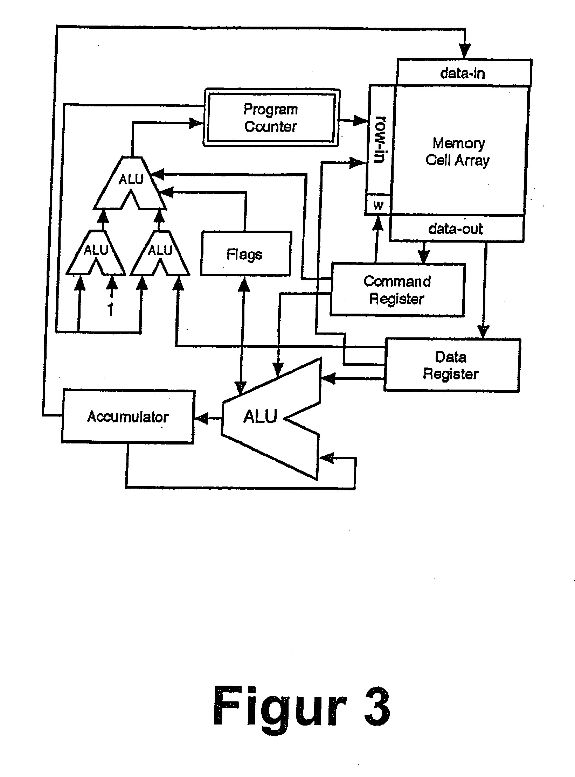

Somit lässt sich die komplette Funktionalität einer arithmetic-logical-unit mit Hilfe der vorstehend genannten arithmetischen Funktion abbilden, wobei die gesamte Berechnung innerhalb des Verschlüsselungsraumes derart erfolgt, dass das Ergebnis im Verschlüsselungsraum korrekt ist, bedingt durch die homomorphe Verschlüsselung. Somit werden letztendlich alle Funktionen der verschlüsselten ALU mit den anliegenden Werten der Operanden a und b ausgeführt, wobei das Ergebnis schlussendlich dann in Abhängigkeit der anliegenden Adressen $o_0$ und $o_1$ ausgewählt wird. Unter Zugrundelegung der in den Figuren 1 und 2 gezeigten Prinzipien lässt sich somit ein vollständiges CPU-Modell, wie es in Figur 3 gezeigt ist, sowohl hardwaretechnisch als auch in Software implementieren. Dabei werden genau die gleichen Abarbeitungsschritte durchgeführt, wie sie auch bei einer herkömmlichen CPU zu finden sind. Allerdings werden anstelle der bei einer CPU verwendeten booleschen Logikoperationen die hierzu äquivalenten arithmetischen Funktionen verwendet, so dass boolesche Logikoperationen innerhalb des Verschlüsselungsraumes ausgeführt werden können. Bei einer reinen Softwareimplementierung würde dies bedeuten, dass die Zielmaschine, auf der die CPU-Simulation zur Ausführung eines verschlüsselten Maschinencodes abläuft, nur die arithmetischen Funktionen mit den verschlüsselten Repräsentanten ausführt. Zu jedem Zeitpunkt liegt der Maschinencode verschlüsselt vor und kann somit von der Zielmaschine nicht eingesehen werden. Auch lassen sich keine Rückschlüsse aus den Bearbeitungsabläufen der Zielmaschine auf den Inhalt des Programms sowie der Daten ziehen.

Somit lassen sich auch entsprechende verschlüsselte Sprunganweisungen beziehungsweise Sprünge implementieren.

Die Figur 3 zeigt, ist das Ergebnis einer Sprunganweisung nicht das allgemeine Register (Akkumulator), sondern das Programmzählregister. Mit den bisher beschriebenen Konstrukten zur Schaltungsbildung können somit auch verschlüsselte Sprünge realisiert werden.

Anders als der unbedingte Sprung (jmp) hängen die bedingten Sprünge vom Systemzustand ab. Dies könne beispielsweise der Additionsübertrag (Carry) und das 0-Ergebnis beziehungsweise Gleichheit von Operanden sein. Die Systemzustände werden durch Flags repräsentiert.

Sei F die Menge der Systemflags, PC, das Programmzählregister, DR das Datenregister und CR das Befehlsregister. Die Funktionen jmp (CR), bcc (CR) und beq (CR) werden analog des Speicherzugriffs als Datenselektoren implementiert und liefern den Wert logisch 1, wenn der entsprechende Befehl ausgeführt werden soll. Die Adresse des nächsten Befehls im Programm ist dann

$$\forall x : x \in \{0 \ldots wordsize\ \text{-}1\},$$

$$PC_x = \quad (jmp\ (CR)\ AND\ DR_x)\ OR$$

$$(bcc\ (CR)\ AND\ DR_x\ AND\ \neg\ F_{carry})\ OR$$

$$(beq\ (CR)\ AND\ DR_x\ AND\ F_{zero})\ OR$$

$$(\neg jmp\ (CR)\ AND\ \neg\ bcc\ (CR)\ AND\ \neg\ beq\ (CR)\ AND\ (PC+1)_x)$$

Die Abarbeitung der Befehle beziehungsweise Instruktionen kann dabei derart erfolgen, dass zunächst mit den Argumenten des Befehls zunächst alle Befehle ausgeführt werden und dass Ergebnis dann wieder, wie bereits bei den vorstehend beschriebenen Datenselektoren, hinsichtlich der enthaltenen Instruktionen ausgewählt wird.

In einer Prototypimplementierung wurde ein System mit einer Wortlänge von 13 Bit implementiert, wobei ein Wort dabei 8 Bit Daten und 5 Bit Befehlsanteil enthält. Dadurch kann der Prototyp mit eintaktigem Speicherzugriff einfach gehalten werden. Der Speicher umfasst 256 Worte mit wahlfreiem Zugriff, wobei bei Speicherzugriffen nur der Datenbestandteil eines Speicherwortes modifiziert wird. Der Befehlssatz, der in dem Maschinencode enthalten sein kann und von der Ausführungseinheit ausführbar ist, bietet die Adressierungsmodelle "unmittelbar" und "direkt".

Bei einer Beispielimplementierung des Sortierprogramms "Bubble sort", das die Zahlen [5,4,9,5] sortieren soll, wurden insgesamt 239 Taktzyklen gemessen, die ausreichen, um die Folge zu sortieren. Die nachfolgende Tabelle zeigt die Anzahl von booleschen Operationen beziehungsweise deren Repräsentationen in verschlüsselter Arithmetik, die hierfür benötigt wurden.

| Cycles | AND | XOR | NOT | total |
|---|---|---|---|---|
| 1 | 68,933 | 44,983 | 15,476 | 129,397 |
| 239 | 16,474,987 | 10,752,132 | 3,698,764 | 30,925,883 |

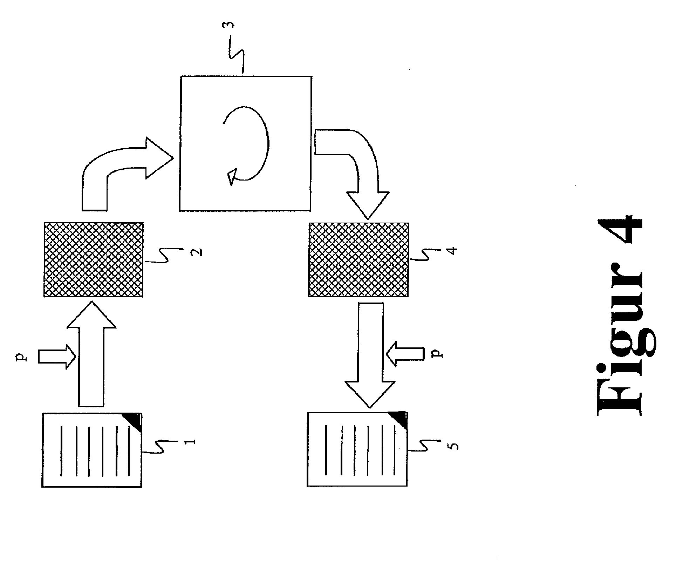

Figur 4 zeigt den übergeordneten Ablauf, wenn ein sicherheitskritisches Computerprogramm von einem fremden Zielsystem ausgeführt werden soll. Dazu wird das Computerprogramm zunächst mit Hilfe eines entsprechenden compilers im Maschinencode 1 übersetzt. Anschließend wird dieser Maschinencode mit Hilfe eines beliebigen homomorphen Verschlüsselungsverfahrens und eines dafür geeigneten Schlüssels p verschlüsselt, und zwar derart, dass jedes Bit einzeln homomorph verschlüsselt wird. Das Ergebnis ist der verschlüsselte Maschinencode 2, bei dem jedes Bit durch eine geeignete Darstellung (bspw. Ganzzahl) repräsentiert ist. Dieser Maschinencode 2 wird nun beispielsweise über das Internet zu einem Zielsystem 3 übermittelt, von dem der verschlüsselte Maschinencode 2 unter Zugrundelegung des vorgestellten Verfahrens ausgeführt werden soll. Am Ende der Berechnung durch das Zielsystem 3 wird der Maschinencode 4, der zwar immer noch verschlüsselt ist, nunmehr aber das Ergebnis der Berechnung enthält, an den Absender zurückgesendet. Unter Zugrundelegung des Schlüssels p wird der verschlüsselte Maschinencode 4 wieder in Klartext 5 übersetzt, woraus nun das Ergebnis im Klartext ablesbar ist.

Aufgrund der Tatsache, dass eine binäre Repräsentation durch die Werte logisch 0 und logisch 1 beispielsweise auch als Ganzzahlen mit entsprechenden Paritätswerten interpretiert werden können, lassen sich selbstverständlich auch Daten dynamisch während des Programmablaufes im Klartext hinzufügen. Diese Daten werden dann schlicht als unverschlüsselte Daten mit in die Berechnung einbezogen. Diese Daten werden im einfachen Verschlüsselungsverfahren schlicht als unverschlüsselte Parameter mit in die Berechnung einbezogen. Im Falle von asymmetrischen Verschlüsselungsverfahren (Gentry, van Dijk, Smart) werden die Klartextdaten zunächst mit dem geeigneten, öffentlichen Schlüsselteil verschlüsselt und dann in die Verarbeitung eingebracht.

**Patentansprüche**

1.  Verfahren zum Ausführen eines bitweise homomorph verschlüsselten Maschinencodes durch eine auf einer Datenverarbeitungsanlage angeordneten Ausführungseinheit, wobei der verschlüsselte Maschinencode Instruktionen enthält, die von der Ausführungseinheit ausführbar sind, mit Bereitstellung von arithmetischen Funktionen, bei denen die Operanden und das daraus resultierende Ergebnis einer booleschen Logikfunktion entspricht, und Ausführen der in dem verschlüsselten Maschinencode enthaltenen Instruktionen durch die Ausführungseinheit unter Anwendung boolescher Logikoperationen, deren Berechnung durch die der jeweiligen booleschen Logikoperation entsprechenden arithmetischen Funktion unter Zugrundelegung der verschlüsselten Bits im Verschlüsselungsraum erfolgt.

2.  Verfahren nach Anspruch 1, gekennzeichnet durch Bereitstellen der arithmetischen Funktionen derart, dass jeweils der binäre Wert oder die Parität der Operanden und des daraus resultierenden Ergebnisses einer booleschen Logikoperation entspricht.

3.  Verfahren nach Anspruch 1 oder 2, **dadurch gekennzeichnet, dass** die Addition als arithmetische Funktion der booleschen Logikfunktion XOR und/oder die Multiplikation als arithmetische Funktion der booleschen Logikoperation AND entspricht.

4.  Verfahren nach einem der vorhergehenden Ansprüche, **dadurch gekennzeichnet, dass** die arithmetische Funktion:

$$r = (a + b) + (a \cdot b)$$

mit r als Ergebnis der Funktion, a als ein erster Operand und b als ein zweiter Operand der booleschen Logikoperation OR entspricht.

5.  Verfahren nach einem der vorhergehenden Ansprüche, **dadurch gekennzeichnet, dass** die arithmetische Funktion:

$$r = a + 1$$

mit r als Ergebnis der Funktion und a als Operand der booleschen Logikfunktion NOT als logische Negation entspricht.

6.  Computerprogramm mit Programmcodemitteln, eingerichtet zur Durchführung des Verfahrens nach einem der vorherigen Ansprüche, wenn das Computerprogramm auf einer Datenverarbeitungsanlage ausgeführt wird.

7.  Vorrichtung zum Ausführen eines bitweise homomorph verschlüsselten Maschinencodes mit einer Ausführungseinheit, eingerichtet zur Durchführung des Verfahrens nach einem der Ansprüche 1 bis 5, wobei der verschlüsselte Maschinencode Instruktionen enthält und die Ausführungseinheit zum Ausführen der in dem verschlüsselten Maschinencode enthaltenen Instruktionen unter Anwendung boolescher Logikoperationen derart eingerichtet ist, dass die Berechnung der booleschen Logikoperationen durch arithmetische Funktionen unter Zugrundelegung der verschlüsselten Bits im Verschlüsselungsraum erfolgt, deren Operanden und des daraus resultierenden Ergebnisses der jeweiligen booleschen Logikfunktion entspricht.

8. Verfahren zum Verschlüsseln eines Maschinencodes mit Verschlüsseln jedes Bits des Maschinencodes unter Verwendung eines homomorphen Verschlüsselungsverfahrens derart, dass jedes Bit des Maschinencodes durch einen Verschlüsselungscode repräsentiert wird.

9. Verfahren nach Anspruch 8, **dadurch gekennzeichnet, dass** ein homomorphes Verschlüsselungsverfahren die Funktion

$$a` = q \cdot a + (r \cdot p)$$

mit a als dem zu verschlüsselnden Bit, q als weiterem Faktor, p als Schlüssel, r als einer beliebigen Zufallszahl und a' als dem Ganzzahl-Ergebnis der Verschlüsselung auf jedes Bit des Maschinencodes angewendet wird.

10. Computerprogramm mit Programmcodemitteln, eingerichtete Durchführung des Verfahrens nach einem der Ansprüche 8 oder 9, wenn das Computerprogramm auf eine Datenverarbeitungsanlage ausgeführt wird.

**Claims**

1. Method for executing a bit-by-bit homomorphically encrypted machine code by means of an execution unit arranged on a data processing system, the encrypted machine code containing instructions which can be executed by the execution unit, with the provision of arithmetic functions in which the operands and the ensuing result correspond to a Boolean logic function, and the execution of the instructions contained in the encrypted machine code by the execution unit using Boolean logic operations which are calculated by the arithmetic function corresponding to the respective Boolean logic operation on the basis of the encrypted bits in the encryption space.

2. Method according to Claim 1, **characterized by** the provision of the arithmetic functions in such a manner that in each case the binary value or the parity of the operands and of the ensuing result corresponds to a Boolean logic operation.

3. Method according to Claim 1 or 2, **characterized in that** addition as the arithmetic function corresponds to the Boolean logic function XOR and/or multiplication as the arithmetic function corresponds to the Boolean logic operation AND.

4. Method according to one of the preceding claims, **characterized in that** the arithmetic function:

$$r = (a + b) + (a \cdot b),$$

where r is the result of the function, a is a first operand and b is a second operand, corresponds to the Boolean logic operation OR.

5. Method according to one of the preceding claims, **characterized in that** the arithmetic function:

$$r = a + 1,$$

where r is the result of the function and a is an operand, corresponds to the Boolean logic function NOT as a logical negation.

6. Computer program having program code means set up to carry out the method according to one of the preceding claims when the computer program is executed on a data processing system.

7. Apparatus for executing a bit-by-bit homomorphically encrypted machine code with an execution unit set up to carry out the method according to one of Claims 1 to 5, the encrypted machine code containing instructions and the execution unit being set up to execute the instructions contained in the encrypted machine code using Boolean logic operations in such a manner that the Boolean logic operations are calculated by arithmetic functions on the basis of the encrypted bits in the encryption space, the operands of which and the ensuing result correspond to the respective Boolean logic function.

8. Method for encrypting a machine code with the encryption of each bit of the machine code using a homomorphic encryption method in such a manner that each bit of the machine code is represented by an encryption code.

9. Method according to Claim 8, **characterized in that** a homomorphic encryption method applies the function

$$a' = q \cdot a + (r \cdot p),$$

where a is the bit to be encrypted, q is a further factor, p is a key, r is an arbitrary random number and a' is the integer result of the encryption, to each bit of the machine code.

10. Computer program having program code means set up to carry out the method according to either of Claims 8 and 9 when the computer program is executed on a data processing system.


**Revendications**

1. Procédé pour l'exécution d'un code machine crypté bit par bit de manière homomorphe par une unité d'exécution disposée dans un système de traitement de données, dans lequel le code machine crypté contient des instructions qui peuvent être exécutées par l'unité d'exécution, avec fourniture de fonctions arithmétiques dont les opérandes et le résultat qui en est obtenu correspondent à une fonction logique booléenne, et pour l'exécution des instructions contenues dans le code machine crypté par l'unité d'exécution par utilisation d'opérations logiques booléennes dont le calcul s'effectue au moyen de la fonction arithmétique correspondant à l'opération logique booléenne respective sur la base des bits cryptés dans l'espace de cryptage.

2. Procédé selon la revendication 1, **caractérisé par** la fourniture des fonctions arithmétiques de telle manière que la valeur binaire ou que la parité des opérandes et du résultat qui en est obtenu corresponde à une opération logique booléenne.

3. Procédé selon la revendication 1 ou 2, **caractérisé en ce que** l'addition, en tant que fonction arithmétique, correspond à la fonction logique OU-EX et/ou **en ce que** la multiplication, en tant que fonction arithmétique, correspond à l'opération logique ET.

4. Procédé selon l'une quelconque des revendications précédentes, **caractérisé en ce que** la fonction arithmétique :

$$r = (a + b) + (a \cdot b)$$

où r est le résultat de la fonction, a est un premier opérande et b est un second opérande, correspond à l'opération logique OU.

5. Procédé selon l'une quelconque des revendications précédentes, **caractérisé en ce que** la fonction arithmétique :

$$r = a + 1$$

où r est le résultat de la fonction et a est un opérande de la fonction logique NON correspond à une négation logique.

6. Programme informatique comportant des moyens à code de programme, conçu pour mettre en oeuvre le procédé selon l'une quelconque des revendications précédentes lorsque le programme informatique est exécuté sur un système de traitement de données.

**7.** Dispositif destiné à l'exécution d'un code machine crypté bit par bit de manière homomorphe au moyen d'une unité d'exécution, conçu pour exécuter le procédé selon l'une quelconque des revendications 1 à 5, dans lequel le code machine crypté contient des instructions et l'unité d'exécution destinée à exécuter les instructions contenues dans le code machine crypté par utilisation d'opérations logiques booléennes est conçue de telle manière que le calcul des opérations logiques booléennes s'effectue par des fonctions arithmétiques sur la base des bits cryptés dans l'espace de cryptage dont les opérandes et le résultat qui en est obtenu correspondent à la fonction logique booléenne respective.

**8.** Procédé pour le cryptage d'un code machine comprenant le cryptage de chaque bit du code machine par utilisation d'un procédé de cryptage homomorphe de telle manière que chaque bit du code machine soit représenté par un code de cryptage.

**9.** Procédé selon la revendication 8, **caractérisé en ce qu'**un procédé de cryptage homomorphe applique la fonction :

$$a` = q \cdot a + (r \cdot p)$$

où a est le bit à crypter, q est un facteur supplémentaire, p est une clé, r est un nombre aléatoire quelconque et a' est le résultat entier du cryptage sur chaque bit du code machine.

**10.** Programme informatique comprenant des moyens à code de programme conçus pour mettre en oeuvre le procédé selon l'une quelconque des revendications 8 ou 9, lorsque le programme informatique est exécuté sur un système de traitement de données.

# Figur 1

# Figur 2

# Figur 3

EP 2 678 772 B1

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100122095 A1
- US 7296163 B2
- US 20100037066 A1

**In der Beschreibung aufgeführte Nicht-Patentliteratur**

- **C. GENTRY.** Fully homomorphic encryption using ideal lattices. *Proceedings of the 41 st annual ACM symposium on Symposium on theory of computing - STOC '09,* 2009, 169
- **N.P. SMART ; F. VERCAUTEREN.** Fully Homomorphic Encryption with Relatively Small Key and Ciphertext Sizes. *Public Key Cryptography-PKC 2010: 13th International Conference on Practice and Theory in Public Key Cryptography,* 2010

- **M.V. DIJK ; C. GENTRY ; S. HALEVI ; V. VAIKUNTANATHAN.** Fully Homomorphic Encryption over the Integers. *Advances in Cryptology-EUROCRYPT 2010, Lecture Notes in Computer Science, 2010,* 2010, vol. 6110, 24-43